# EUROPEAN PATENT SPECIFICATION

(11) **EP 1 300 214 B1**
(45) Date of publication and mention of the grant of the patent: **07.06.2006**
(21) Application number: 01949932.6
(22) Date of filing: 11.07.2001
(51) Int. Cl.: B23K 35/32

(54) **BRAZING FILLER METAL**
LÖTFÜLLMATERIAL
METAL D'APPORT POUR BRASAGE

(30) Priority: 11.07.2000 JP 2000209685
(43) Date of publication of application: 09.04.2003
(73) Proprietor: Citizen Watch Co., Ltd., Tokyo 188-8511 (JP)
(72) Inventor: UCHIDA, Hitoshi, Nishitokyo-shi, Tokyo 188-8511 (JP); SHIBUYA, Yoshitsugu, Nishitokyo-shi, Tokyo 188-8511 (JP)
(74) Representative: Hofer, Dorothea
(86) International application number: PCT/JP2001/006001
(87) International publication number: WO 2002/004164

(56) References cited:
- EP-A- 0 638 656
- JP-A- 3 060 893
- JP-A- 54 071 748
- JP-A- 54 109 049
- JP-A- 61 291 939
- US-A- 4 764 435
- NISHIYAMA N ET AL: "Undercooled liquid-to-glass transition during continuous cooling in Pd–Cu–Ni–P alloys" APPLIED PHYSICS LETTERS, AMERICAN INSTITUTE OF PHYSICS. NEW YORK, US, vol. 76, no. 26, 26 June 2000 (2000-06-26), pages 3914-3916, XP012025635 ISSN: 0003-6951

## Description

### TECHNICAL FIELD

The invention relates to a brazing filler metal with which brazing having excellent corrosion resistance and sufficient joining strength can be implemented, and in particular, to a brazing filler metal which is suitable for use in brazing of metals of which decorativeness in external appearance is required, such as titanium metal, and stainless steel, and with which brazing can be implemented at a temperature not higher than the transformation temperature of pure titanium.

### BACKGROUND TECHNOLOGY

Brazing has been known for ages as one of metalworking techniques whereby mating metals can be joined with each other with relative ease. Since brazing is among important metalworking techniques of even today, it is applied to a wide variety of industrial sectors, and kinds of brazing filler metal for use in the brazing cover a broad spectrum.

For some kinds of metals and their alloy, however, there has not been found an effective brazing filler metal as yet. Titanium metal (pure titanium metal and titanium alloy included) is one of such metals. As titanium (Ti) metal has excellent properties such as light weight, high strength, and high corrosion resistance, it is in widespread use in various industrial sectors, and, as with stainless steel, is used even for metallic articles (for example, a wrist watch, the frame of eyeglasses) of which decorativeness in external appearance is required.

Crystals of pure titanium have a hexagonal close-packed structure at room temperature, however, they will have a body-centered cubic structure at a temperature not lower than 882°C which is the transformation temperature (the temperature at which a phase change occurs) of pure titanium. Further, Ti metal has a property of causing poor wettability of a brazing filler metal because the Ti metal has a thin oxide film, called a passivity film, formed on the surface thereof due to the effect of air, moisture, and so forth, and the passivity film is solid and difficult to remove, so that sufficient joining strength has not been obtained upon brazing. Accordingly, it is a normal practice adopted when brazing the Ti metals to use a flux (an organic solvent) for removal of the passivity film. The trouble, however, is that there has arisen a possibility that the interior of a furnace is polluted by organic substance when brazing is carried out in the furnace because the flux contains the organic substance such as resin, and so froth.

By the way, as described in an article titled "Fabrication Technique of Titanium" compiled by Japan Titanium Society (issued by the Nikkan Kogyo Shimbun, Ltd.), silver solder and titanium solder have been well known as conventional brazing filler metals for use in brazing of members made of Ti (referred to hereinafter merely as "Ti members").

Silver solder as a brazing filler metal has its own melting point in a range of from about 800 to 1000°C. Examples of a brazing filler metal include a brazing filler metal with which brazing can be executed at a temperature not higher than the transformation temperature of pure titanium, for example, BVAg-8 (melting point:780°C) according to the JIS specification, which is at times put to use in brazing of the Ti members. However, such a brazing filler metal as described is not in much use for brazing in fabrication of metallic articles such as a wrist watch, and the frame of eyeglasses, of which decorativeness in external appearance is required, because the brazing filler metal has poor corrosion resistance and is prone to initiation of corrosion after brazing.

Examples of titanium solder include a Ti-Cu-Ni based brazing filler metal. In this case, however, since the Ti-Cu-Ni based brazing filler metal has a melting point not lower than 900°C, brazing has to be executed inevitably at a temperature higher than the transformation temperature of pure titanium, and consequently, it has a drawback in that the Ti members as brazed undergo a phase change after brazing, thereby causing the crystal structure thereof to be coarsened. Accordingly, in the case of brazing the Ti members with the titanium solder, there is the need for taking steps of removing coarsened portions of the crystal structure thereof by grinding, and so forth, and subsequently applying thereto mirror finish, and the like.

Now, a brazing filler metal capable of implementing joining of pure titanium metal or titanium alloy with pure gold or gold alloy without causing erosion of parts of the pure gold and the gold alloy is disclosed in JP 9-85485, A. This brazing filler metal, however, is composed of silver (Ag), as the base constituent, mixed with indium (In) and copper (Cu), so that the same has a drawback in that joining has to be executed at 1023°C not lower than the transformation temperature of pure titanium.

On the other hand, as a method of joining Ti members together, welding is in widespread use besides brazing. Welding has no problem in respect of joining strength and corrosion resistance, however, it has a problem in that there is the need for heating the Ti members locally to a high temperature for implementing joining. As a result, there have emerged spots where a temperature is in excess of the transformation temperature of pure titanium, causing the crystal structure thereof to be coarsened, so that welding has a drawback in that portions of the Ti members, worked on by welding, require post-working. Also, there are times when projection welding is applied for joining of Ti members whereby welding is executed by causing electric current to flow through projections of the Ti members, formed for the purpose of welding. The projection welding, however, has had a drawback in that, if the Ti members to be joined with each other are complex in construction, it becomes difficult to cause uniform concentration of electric current on the projections of the Ti members, thus resulting in difficulty with welding.

As described in the foregoing, conventional techniques for joining metallic articles made up of Ti metal, stainless steel, and so forth have not offered any joining method capable of securing excellent corrosion resistance and sufficient joining strength, and further, capable of implementing joining at a temperature not higher than the transformation temperature of pure titanium.

The invention has been developed to solve the problems as described above, and it is an object of the invention to provide a brazing filler metal for use in brazing of metals such as Ti metal and stainless steel, used in members of which decorativeness in external appearance is required, wherein brazing can be implemented at a temperature not higher than the transformation temperature of pure titanium while securing excellent corrosion resistance and sufficient joining strength.

### DISCLOSURE OF THE INVENTION

A brazing filler metal according to the invention has a composition as specified in claim 1, comprising palladium, metal having homogeneous solubility with the palladium, and phosphorus as main constituents thereof, wherein a composition ratio of the phosphorus is in excess of 2 wt. % to less than 20 wt. %.

The brazing filler metal described above is added with platinum and nickel, as the metal having homogeneous solubility with the palladium.

With the brazing filler metal described above, the composition ratio of the platinum is in excess of 4 to less than 86 wt. %, and a composition ratio of the nickel is in excess of 4 to less than 36 wt. %.

Further, the composition ratio of the phosphorus preferably falls within a range of about 3 to about 17 wt. %, and the composition ratio of the platinum more preferably falls within a range of about 5 to about 85 wt. %. The composition ratio of the nickel preferably falls within a range of about 5 to about 32 wt. %.

### BRIEF DESCRIPTION OF THE DRAWINGS

Fig. 1 is a phase diagram of a binary system of Pd - P, the horizontal axis thereof showing a composition ratio of P to Pd while the vertical axis thereof showing a melting point;
Fig. 2 a phase diagram of a binary system of Pt - P, the horizontal axis thereof showing a composition ratio of P to Pt while the vertical axis thereof showing a melting point;

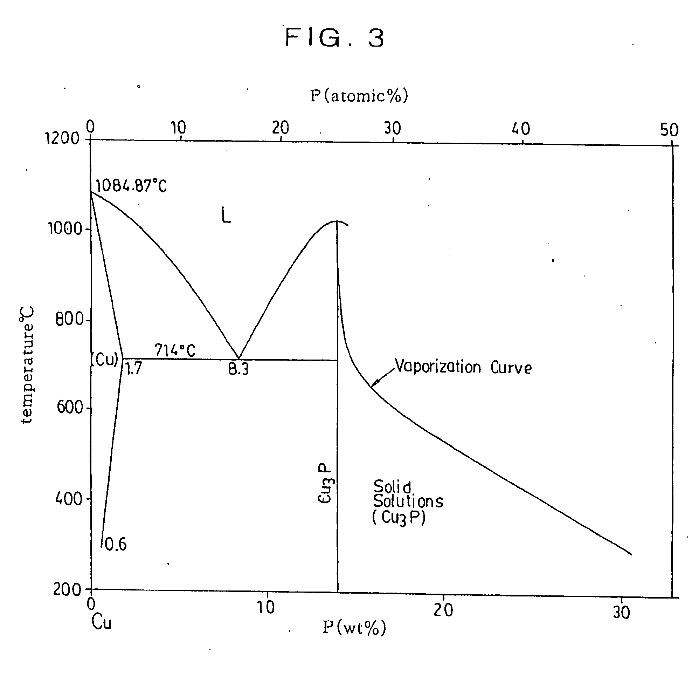

Fig. 3 is a phase diagram of a binary system of Cu - P, the horizontal axis thereof showing a composition ratio of P to Cu while the vertical axis thereof showing a melting point;
Fig. 4 is a plan view showing a metallic member consisting of two pure titanium metal sheets, overlapped so as to cross each other;
Fig. 5 is a sectional view taken on line 5 - 5 in Fig. 4;
Fig. 6 is a sectional view of one of watch appearance portions shown in Fig. 7, cut along a plane containing a end-piece hole;
Fig. 7 is a perspective view showing a case fabricated by joining four pieces of the watch appearance portions to a case body; and
Fig. 8 is an assembly view showing the case body and the four pieces of the watch appearance portions before joining the four pieces of the watch appearance portions to the case body.

### BEST MODE FOR CARRYING OUT THE INVENTION

Embodiments of a brazing filler metal according to the invention are described in detail hereinafter with reference to the accompanying drawings.

### First Brazing Filler Metal

The brazing filler metal according to the invention is described hereinafter. The brazing filler metal is composed of palladium (Pd) and phosphorus (P) with addition of metals having homogeneous solubility with the Pd, and examples thereof include a Pd-Pt-Ni-P based brazing filler metal obtained by addition of platinum (Pt) and nickel (Ni) to the Pd-P based brazing filler metal.

The Pd-Pt-Ni-P based brazing filler metal is produced by a process comprising the steps of weighing respective quantities of palladium (Pd), platinum (Pt), nickel (Ni), and phosphorus (P) such that composition ratios as desired are obtained, respectively, producing an alloy by melting the respective metals by means of the high frequency melting process, and subsequently working the alloy into a slender foil-like shape (ribbon-like shape) about 60 µm thick in an argon (Ar) atmosphere.

Now, 16 samples of different Pd-Pt-Ni-P based brazing filler metals, numbered from 1) to 16), were prepared by varying a composition ratio (wt. %) of each of four metal elements, that is, Pd, Pt, Ni, and P, as appropriate, and the melting point and wettability against titanium metal of the respective samples were examined. Table 1 shows the results of tests conducted.

**Table 1**

| Sample | Pd | Pt | Ni | P | ** | wettability against ti |
|---|---|---|---|---|---|---|
| 1) | 79 | 4 | 10 | 7 | 915°C | Δ |
| 2) | 72 | 11 | 10 | 7 | 833°C | ○ |
| 3) | 65 | 7 | 8 | 20 | 932°C | ○ |
| 4) | 68 | 5 | 10 | 17 | 870°C | ○ |
| 5) | 36 | 27 | 20 | 17 | 721°C | ○ |
| 6) | 45 | 15 | 32 | 8 | 863°C | ○ |
| 7) | 47 | 11 | 36 | 6 | 889°C | ○ |
| 8) | 60 | 25 | 5 | 10 | 847°C | ○ |
| 9) | 75 | 16 | 4 | 5 | 865°C | Δ |
| 10) | 50 | 38 | 9 | 3 | 642°C | ⓞ |
| 11) | 34 | 53 | 8 | 5 | 578°C | ⓞ |
| 12) | 24 | 62 | 10 | 4 | 586°C | ⓞ |
| 13) | 56 | 31 | 11 | 2 | 910°C | ○ |
| 14) | 12 | 76 | 7 | 5 | 702°C | ○ |
| 15) | 4 | 85 | 6 | 5 | 860°C | ○ |
| 16) | 2. | 86 | 7 | 5 | 910°C | Δ |

| | | | | | | |
|---|---|---|---|---|---|---|
| (unit :wt %) | | | | | | |
| * * : melting point | | | | | | |
| ⓞ : very good | | | | | | |
| ○ : good | | | | | | |
| Δ : slightly good | | | | | | |

It can be said on the basis of Table 1 that a composition ratio of the respective metal elements, that is, P, Pt, and Ni, necessary for the respective Pd-Pt-Ni-P based brazing filler metals to conform to the brazing filler metal as an object of the invention is as follows.

In view of findings that in the case of the composition ratio of P being at 2 wt. % as with Sample 13), the melting point is at 910°C while in the case of the composition ratio of P being at 3 wt. % as with Sample 10), the melting point is lowered to 642°C, thereby enabling joining by brazing to be effected at a low temperature not higher than the transformation temperature of pure titanium, (referred to hereinafter as low temperature joining), which is an object of the invention, the composition ratio of P needs to be in excess of 2 wt. %, and is preferably not less than about 3 wt. %. Further, in view of findings that in the case of the composition ratio of P being at 20 wt. % as with Sample 3), the melting point is at 932°C while in the case of the composition ratio of P being at 17 wt. % as with Samples 4), and 5), respectively, the melting point is lowered to 870°C, and 721°C, respectively, thereby enabling low temperature joining to be effected, the composition ratio of P needs to be less than 20 wt. %, and is preferably not more than about 17 wt. %. Accordingly, the composition ratio of P has a range necessary for the Pd-Pt-Ni-P based brazing filler metal to conform to the brazing filler metal as the object of the invention, and the range is in excess of 2 wt. % to less than 20 wt. %, and is preferably from about 3 wt. % to about 17 wt. %.

Then, the composition ratio of Pt is as follows. In view of findings that in the case of the composition ratio of Pt being at 4 wt. % as with Sample 1), the melting point is at 915°C while in the case of the composition ratio of Pt being at 5 wt. % as with Samples 4), the melting point is lowered to 870°C, thereby enabling low temperature joining to be effected, the composition ratio of Pt needs to be in excess of 4 wt. %, and is preferably not less than about 5 wt. %. Further, in view of findings that in the case of the composition ratio of Pt being at 86 wt. % as with Sample 16), the melting point is at 910°C while in the case of the composition ratio of Pt being at 85 wt. % as with Sample 15), the melting point is lowered to 860°C, thereby enabling low temperature joining to be effected, the composition ratio of Pt needs to be less than 86 wt. %, and is preferably not more than about 85 wt. %. Accordingly, the composition ratio of Pt has a range necessary for the Pd-Pt-Ni-P based brazing filler metal to conform to the brazing filler metal as the object of the invention, and the range is in excess of 4 wt. % to less than 86 wt. %, and is preferably from about 5 wt. % to about 85 wt. %.

Further, the composition ratio of Ni is as follows. In the case of the composition ratio of Ni being at 4 wt. % as with Sample 9), the melting point becomes lower than the transformation temperature of pure titanium, however, there is observed a tendency that wettability against titanium metal becomes insufficient. In the case of the composition ratio of Ni being at 5 wt. % as with Sample 8), however, the melting point becomes lower than the transformation temperature of pure titanium, and the wettability against titanium metal becomes sufficient. Then, in the case of the composition ratio of Ni being at 36 wt. % as with Sample 7), the melting point comes to exceed the transformation temperature of pure titanium although the wettability against titanium metal is excellent. However, if the composition ratio of Ni becomes 32 wt. % as with Sample 6), the melting point drops below the transformation temperature of pure titanium. Accordingly, the composition ratio of Ni has a range necessary for the Pd-Pt-Ni-P based brazing filler metal to conform to the brazing filler metal as the object of the invention, and.the range is in excess of 4 wt. % to less than 36 wt. %, and is preferably from about 5 wt. % to about 32 wt. %.

It is samples 10), 11), and 12), having the melting point at a temperature in the order of 500 to 600°C, that have particularly excellent wettability against titanium metal, and any of these samples was found spreading extensively even on pure titanium metal. Further, as described in detail later on, these samples were found having satisfactory corrosion resistance and joining strength.

As described in the foregoing, the Pd-Pt-Ni-P based brazing filler metal is suited for low temperature joining provided that the composition ratio of P falls within the abovementioned range, and further, provided that the composition ratio of Pt as well falls within the abovementioned range, the Pd-Pt-Ni-P based brazing filler metal becomes a brazing filler metal satisfying all of three requirements, that is, securing of excellent corrosion resistance, and securing of sufficient joining strength in addition to the low temperature joining, and having improved wettability against titanium metal as well. Furthermore, provided that the composition ratio of Ni as well falls within the abovementioned range, the Pd-Pt-Ni-P based brazing filler metal no longer has brittleness, and becomes a more preferable brazing filler metal having further improved wettability against titanium metal.

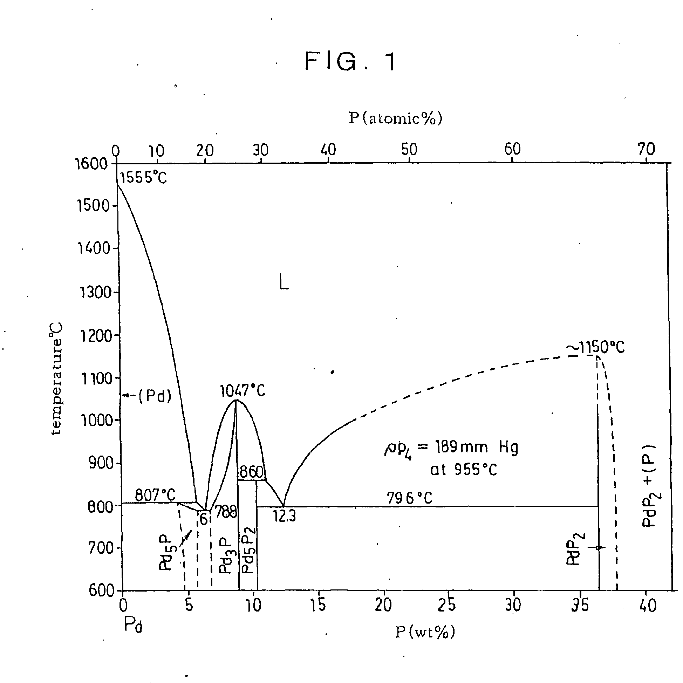

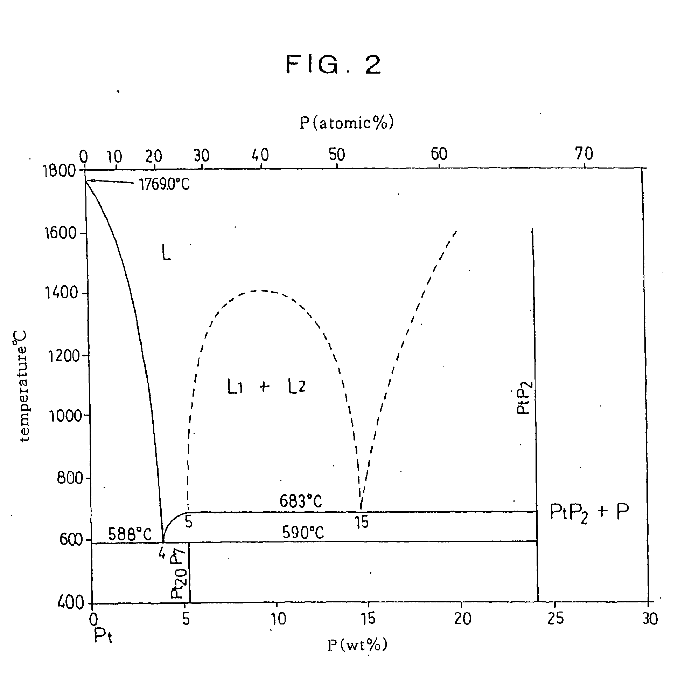

Next, the reason why the Pd-Pt-Ni-P based brazing filler metal composed of those metal elements at respective specified ratios as described above can conform to the brazing filler metal as the object of the invention is described in detail hereinafter with reference to a phase diagram of an alloy, shown in Figs. 1 and 2, respectively. Fig. 1 is a phase diagram of a binary system of Pd - P, the horizontal axis thereof showing a composition ratio of P to Pd while the vertical axis thereof showing a melting point, and Fig. 2 a phase diagram of a binary system of Pt - P, the horizontal axis thereof showing a composition ratio of P to Pt while the vertical axis thereof showing a melting point. Detailed description on either of both is stated in detail, respectively, in Literature 1 given below.

### Literature 1: "Binary Alloy Phase Diagrams", Vol. 1, Vol. 2, American Society for Metals, Metals Park, Ohio 44073

As shown in Fig. 1, in the case of a Pd - P alloy, its melting point is lowered from 1555°C according as the composition ratio of P is increased, and upon the composition ratio of P reaching 6 wt. % with the composition ratio of Pd at 94 wt. %, there occurs a eutectic composition with a melting point being drastically lowered to about 800°C. A state of such a eutectic composition is designated as a first eutectic of Pd - P. Also, according as the composition ratio of P is further increased, the melting point rises up to the neighborhood of about 1000°C once, and thereafter, upon the composition ratio of P reaching 12 wt. % with the composition ratio of Pd at 88 wt. %, there occurs a eutectic composition again with a melting point drastically dropping down to the neighborhood of about 800°C. A state of such a eutectic composition is designated as a second eutectic of Pd- P.

As shown in Fig. 2, in the case of a Pt - P alloy, its melting point is lowered from 1769°C according as the composition ratio of P is increased, and upon the composition ratio of P reaching 4 wt. % with the composition ratio of Pt at 96 wt. %, there occurs a eutectic composition with a melting point being drastically lowered to about 600°C. A state of such a eutectic composition is designated as a eutectic of Pt - P.

Thus, in view of the fact that the Pd - P alloy has the property of the melting point thereof being lowered due to the formation of the eutectic composition, it is reasoned that a case where the Pd-Pt-Ni-P based brazing filler metal is able to conform to the brazing filler metal as the object of the invention represents a case of the same having a specific composition wherein the first eutectic of Pd - P or second eutectic of Pd - P can be utilized. Further, in view of the fact that the Pt - P alloy as well has the property of the melting point thereof being lowered due to the formation of the eutectic composition, it is also reasoned that the case where the Pd-Pt-Ni-P based brazing filler metal is able to conform to the brazing filler metal as the object of the invention represents also a case of the same having a specific composition wherein the eutectic composition of Pt - P can be utilized. It is further reasoned that if the Pd-Pt-Ni-P based brazing filler metal has a composition wherein both the first or second eutectic of Pd - P and the eutectic composition of Pt - P can be utilized, the melting point can be sharply lowered. In either case, in view of the fact that the Pd - P alloy will no longer has the first eutectic of Pd - P upon the composition ratio of P exceeding 6 wt. %, and will have the second eutectic of Pd - P upon the composition ratio of P reaching 12 wt. %, it is reasoned that the first eutectic of Pd - P is utilized with a composition of the Pd-Pt-Ni-P based brazing filler metal, containing P at a composition ratio in a range of 3 to 10 wt. %, while the second eutectic of Pd - P is utilized with a composition thereof, containing P at a composition ratio in a range of 10 to 17 wt. %.

The Pd-Pt-Ni-P based brazing filler metal may be considered to be an alloy composed of Pd, P and Pt at the specific composition ratios described above, respectively, with addition of Ni which is a metal having homogeneous solubility with the Pd. With addition of Ni, there is obtaining an advantageous effect in that wettability of the Pd-Pt-Ni-P based brazing filler metal, against metallic members to be joined together therewith, is improved, and quality thereof in respect of brittleness is improved. Since Ni added is in effect substituted for Pd together with Pt, however, addition of Ni in an improper amount results in deviation of the composition ratios of Pd and P, respectively, from those required for the eutectic composition, thereby raising a possibility that a preferable brazing filler metal as the object of the invention is no longer obtainable due to a rise in a melting point and lack of occurrence of uniform solid solution. Accordingly, it is reasoned that the composition ratio of Ni has a range necessary for the Pd-Pt-Ni-P based brazing filler metal to conform to the brazing filler metal as the object of the invention.

From the viewpoints described above, it is reasoned that the respective composition ratios of P, Pt, and Ni, composing the Pd-Pt-Ni-P based brazing filler metal, have respective ranges required for obtaining the brazing filler metal as the object of the invention, and the respective ranges found from the results of the tests, shown with reference to Samples 1) to 16) described above, are preferable ranges of the respective composition ratios.

To sum up, it is reasoned that the Pd-Pt-Ni-P based brazing filler metal according to the invention is turned into a brazing filler metal with which low temperature joining can be executed by utilizing the first or second eutectic of Pd - P provided that the same has a composition wherein the composition ratio of P falls within a range in excess of 2 to less than 20 wt. %, preferably within a range of about 3 to about 10 wt. %, and a range of about 10 to about 17 wt. %. It is further reasoned that provided that the Pd-Pt-Ni-P based brazing filler metal according to the invention has a composition wherein the composition ratio of Pt falls within a range in excess of 4 to less than 86 wt. %, preferably within a range of about 5 to about 85 wt. %, in addition to the previously described composition, the same is turned into a brazing filler metal with which brazing can be implemented at a still lower melting point by utilizing the eutectic of Pt - P as well, such a brazing filler metal being a brazing filler metal satisfying all of the three requirements, that is, securing of excellent corrosion resistance and securing of sufficient joining strength in addition to the low temperature joining, and having improved wettability against titanium metal as well. In either of the abovementioned cases, since the composition ratio of Ni exceeds 4 wt. %, and is less than 36 wt. %, preferably falling within a range of 5 to 32 wt. %, there results an alloy having homogeneity at a low melting point, so that a brazing filler metal having no brittleness and having more excellent wettability can be obtained.

### (Corrosion Resistance and Joining Strength of a Brazing Filler Metal)

Now, corrosion resistance and joining strength of the brazing filler metal according to the invention are described hereinafter.

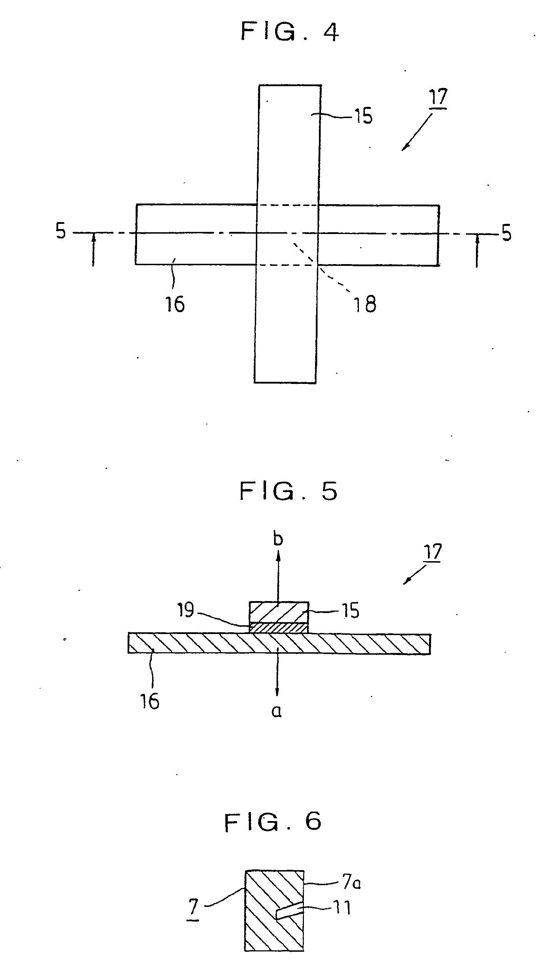

In order to check the corrosion resistance and joining strength of the brazing filler metal described hereinbefore, a metallic member 17 as shown in Fig. 4 were prepared to conduct the following tests thereon. The metallic member 17 consist of two pure titanium metal sheets, 15, 16, each about 25 mm in length × about 5 mm in width× about 1 mm in thickness, overlapped so as to cross each other, and the brazing filler metal described above (the Pd-Pt-Ni-P based alloy) 19 is sandwiched between the two pure titanium metal sheets 15, 16 at an intersection 18 where the two pure titanium metal sheets 15, 16 are in contact with each other, thereby preparing 4 samples including Examples 1 to 4 shown in Table 3. Each of Samples was prepared by securing the intersection 18 with a tool(not shown), and subsequently heating the Samples at respective brazing temperatures shown in Table 3, at a pressure of 6 × 10⁻⁶ Torr for ten minutes, followed by rapid cooling of the same in an argon atmosphere.

**Table 3**

| Example | a | b | c | d | e |
|---|---|---|---|---|---|
| 1) | Pd₃₄PL₅₃Ni₈P₅ | O | 980MPa | 750°C | no |
| 2) | Pd₄₇Pt₃₈Ni₉P₆ | O | 880MPa | 750°C | no |
| 3) | Pd₇₂Pt₁₁Ni₁₀P₇ | O | 800MPa | 850°C | no |
| 4) | Pd₈₀Pt₁₀Ni₈P₂ | O | 800MPa | 920°C | exist |

| | | | | | |
|---|---|---|---|---|---|
| a) brazing filler metal(wt%) b) corrosion resistance | | | | | |
| c) joining strength (MPa) d) brazing temperature (°C) | | | | | |
| e) TI transformation | | | | | |

A corrosion resistance test was conducted on the respective Samples of the metallic member 17 in accordance with the CASS test specified by ISO3370, and joining strength was measured by conducting a tensile test on the respective Samples whereby the pure titanium metal sheets 15, 16 were pulled in the direction of thickness, a and b, respectively, by use of a tool(not shown).

Further, for the sake of comparison, similar samples using silver solder (58 wt. % of Ag, 32 wt. % of Cu, and 10 wt.% of Pd) and titanium solder (60 wt. % of Ti, 25 wt. % of Cu, and 15 wt. % of Ni), well known as the conventional brazing filler metal, were prepared by the previously described procedure, and corrosion resistance tests and joining strength tests were conducted thereon. The results of such tests are shown in Tables 4. In Tables 3 and 4, the composition ratio of the respective metal elements composing the respective brazing filler metals is indicated by a number affixed to a symbol for the respective metal elements. For example, in the case of Example 1, the composition ratio of Pd is 34 wt. %, that of Pt 53 wt. %, that of Ni 8 wt. %, and that of P 5 wt. %.

**Table 4**

| Comp Exp | a | b | c | d | e |
|---|---|---|---|---|---|
| 1) | Ti₆₀Cu₂₅Nu₁₅ | O | 820MPa | 1000°C | exist |
| 2) | Ag₅₈Cu₃₂Pd₁₀ | × | 530MPa | 780°C | no |

| | | | | | |
|---|---|---|---|---|---|
| a) brazing filler metal(wt%) b) corrosion resistance | | | | | |
| c) joining strength(MPa) d) brazing temperature (°C) | | | | | |
| e) TI transformation | | | | | |

Examples 1 to 4, shown in Table 3, indicate the results of tests conducted on the Pd-Pt-Ni-P based brazing filler metals, and Examples 1 to 3, among these Examples, indicate the results of the tests conducted on the Pd-Pt-Ni-P based brazing filler metals wherein the composition ratio of the respective metal elements is within the respective ranges as described hereinbefore.

As is evident from the abovementioned Tables 3 and 4, any of the brazing filler metals according to the invention exhibits excellent corrosion resistance. Further, their joining strength have better values than those for Comparative Examples 1 and 2. Upon checking brazing temperatures, however, it is found that brazing with any of the brazing filler metals according to the invention is feasible at a temperature not higher than the transformation temperature of pure titanium, and in contrast, the brazing temperature for Comparative Example 1 is at 1000°C which is in excess of the transformation temperature of pure titanium. Thus, the brazing filler metals according to the invention are found to satisfy all of the three requirements, that is, securing of excellent corrosion resistance and sufficient joining strength, along with capability of implementing brazing at a temperature not higher than the transformation temperature of pure titanium. Accordingly, it can be said that the brazing filler metals according to the invention are superior to a conventional Ti-Cu-Ni based brazing filler metal (Comparative Example 1) because even if the former are used in joining together metallic articles made of Ti, the surface condition of the respective metallic articles, prior to joining, can be maintained without causing the crystal structure of the metallic articles to be coarsened. It can also be said that the brazing filler metals according to the invention are significantly superior to silver solder (Comparative Example 2) in respect of corrosion resistance and joining strength in comparison with the latter.

### (Joining of components to a case with the brazing filler metal)

Now, with a case which is an exterior component of a timepiece, description is given hereinafter on a case of joining watch appearance portions thereof to a case body with the brazing filler metals according to the invention.

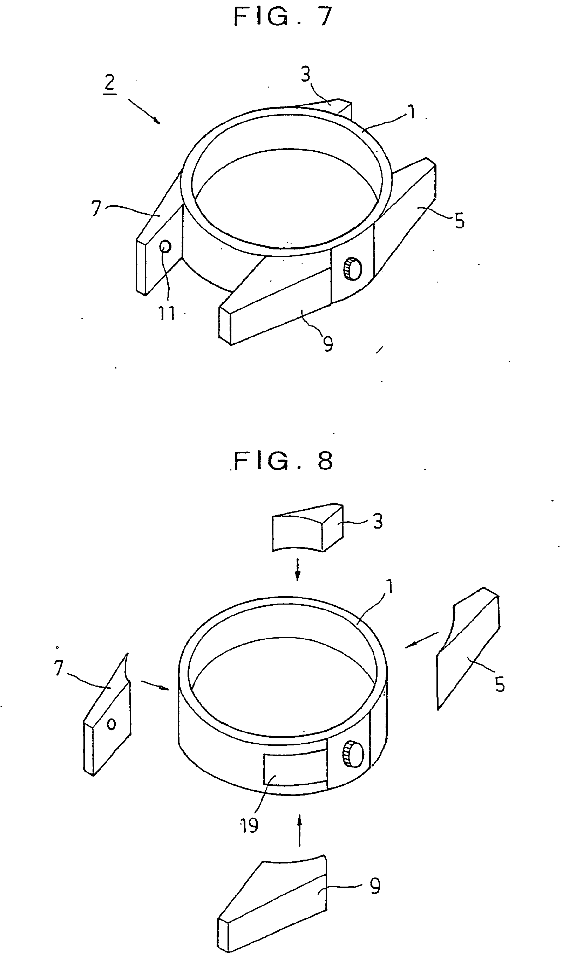

Fig. 7 is a perspective view showing a case 2 fabricated by joining 4 pieces of the watch appearance portions 3, 5, 7, and 9 to a case body 1 with the Pd-Pt-Ni-P based brazing filler metal which is the brazing filler metal according to the invention. The case body 1 comprises a sidewall made of Ti, formed in the shape of a cylinder thin in wall thickness, and a bottom made of Ti, and is polished so as to have a mirror-finished surface including contacting surfaces thereof, opposite to the watch appearance portions. Each of the watch appearance portions 3, 5, 7, and 9, made of titanium alloy, is formed by applying grinding and polishing thereto, and the outside surface thereof except a contacting surface with the case body 1, is polished so as to have a hairline finished surface. Further, each of the watch appearance portions 3, 5, 7, and 9 is worked on beforehand for drilling a end-piece hole 11 therein. The case body 1 and the watch appearance portions 3, 5, 7, and 9 are formed by forging, respectively.

As shown in Fig. 8, a Pd-Pt-Ni-P based brazing filler metal 19 (Pd at 34 wt. %, Pt at 53 wt. %, Ni at 8 wt. %, and P at 5 wt. %) according to the invention was sandwiched between the faying surface of the case body 1 and that of the respective watch appearance portions 3, 5, 7, and 9, and was pressed into contact with the respective contacting surfaces before secured by tools (not shown). Thereafter, the case body 1 and respective watch appearance portions 3, 5, 7, and 9 were heated to a temperature at 700°C under a pressure at 6 × 10⁻⁶ Torr for 20 minutes, and subsequently, was rapidly cooled in an argon atmosphere.

As a result, there occurred full penetration of the brazing filler metal according to the invention into joined portions between the case body 1 and the respective watch appearance portions 3, 5, 7 and 9, whereupon the case 2 wherein the case body 1 was found fully integral with the respective watch appearance portions 3, 5, 7, and 9 in the external appearance was obtained. With the case 2, a temperature at which the same was heated was not higher than the transformation temperature of pure titanium, and consequently, the surface condition of the components thereof, prior to joining, was found maintained without causing the crystal structure of Ti metal to be coarsened, thereby forming clean interfaces between the case body 1 and the respective watch appearance portions 3, 5, 7 and 9. Furthermore, the joined potions therebetween were able to have a sufficient tensile strength (joining strength).

As described in the foregoing, if the metallic articles, that is, the case body 1 and the respective watch appearance portions 3, 5, 7 and 9, are joined with each other by use of the brazing filler metal according to the invention, both the metallic articles can be joined together in a preferable condition.

Meanwhile, in view of recent demand for expanding flexibility in designing, there has been increasing requirement that a case body and respective watch appearance portions are to be fabricated separately, and finished in a different surface condition, respectively. For example, the case body is to be finished so as to have a mirror-finished surface while the respective watch appearance portions are to be finished so as to have a hairline finished surface. However, since a conventional case has been fabricated as an integrally formed component comprising the respective watch appearance portions to be linked with a bracelet, and the interface between case and watch appearance portion is continuous surface, it has been difficult to definitely identify the interfaces between the case body to be finished to have the mirror-finished surface, and the respective watch appearance portions to be finished to have the hairline finished surface.

Further, in the case of forming a single-piece case, it has an advantage in terms of cost to fabricate the same by forging, however, there is then a drawback in that the shape of the respective watch appearance portions is subject to considerable constraints in terms of designing. The respective watch appearance portions is provided with a end-piece hole for inserting a spring bar with which the bracelet is secured thereto, formed in a post-working process using a drill, and there has been no choice but to drill the end-piece hole from the inside of the respective watch appearance portions on the ground that the end-piece hole opened in the respective watch appearance portions, if it can be seen from the outside, is undesirable from the external appearance point of view. This has rendered a working for drilling the end-piece hole difficult to execute, and furthermore, the respective watch appearance portions, disposed opposite to each other, interfere with the working for drilling the end-piece hole, so that it has become impossible to form the end-piece hole 11 vertically to a work face 7a of the watch appearance portion 7, as shown in Fig. 6 by way of example, and consequently, there has been no choice but to form the same on the skew. For this reason, there has arisen the need for forming the end-piece hole 11 somewhat larger in size than the spring bar, resulting in an excess clearance formed between the spring bar and the end-piece hole 11, and thereby creating a cause for the slack (rattle).

As described hereinbefore, however, if the case body 1 is joined to the respective watch appearance portions 3, 5, 7, and 9 by use of the brazing filler metal according to the invention, it is possible to obtain the case 2 wherein both components thereof are found fully integral with each other in external appearance as well, thereby completely preventing occurrence of the problems as encountered with the conventional case.

A kind of metal suitable for satisfactory joining to the other of the same by use of the brazing filler metal according to the invention is titanium metal. Since a typical titanium alloy, for example, Ti-6Al-4V, has its transformation temperature at 995°C, the brazing filler metal according to the invention is adequate for application to a titanium alloy. Furthermore, the scope of application of the brazing filler metal according to the invention is not limited to titanium metal, but include other metals, for example, stainless steel, so that the brazing filler metal according to the invention is applicable to various metals of which decorativeness in external appearance is required.

In addition, the brazing filler metal according to the invention has no limitation in its shape. Considering convenience in executing a joining work, the same is preferably produced in the shape of a sheet, foil, wire, and so forth, however, there can be cases where its shape is accompanied by brittleness to some extent, depending on the chemical composition thereof, in which case the brazing filler metal according to the invention may be used after reducing the same to powders, and pressing the powders for molding.

A heating temperature at the time of brazing is in a range of 620 to 850°C, preferably in a range of 650 to 750°C, brazing time is preferably in the order of from about 5 minutes to about 1 hour, and an atmosphere in a furnace at the time of brazing is preferably at a pressure not higher than 10⁻⁴ Torr.

### INDUSTRIAL APPLICABILITY

With the brazing filler metal according to the invention, joining of metallic articles by brazing can be implemented at a temperature not higher than the transformation temperature of pure titanium, and sufficient joining strength as well as excellent corrosion resistance of the metallic articles joined together can be secured. Accordingly, the brazing filler metal according to the invention is suitable for use in brazing of metals such as titanium metal, and stainless steel, of which decorativeness in external appearance is required. In addition, since the brazing filler metal according to the invention has improved wettability against titanium metal, flux is unnecessary in executing brazing, and there is no need for post-working after the brazing, so that the brazing filler metal according to the invention is suited for brazing of metallic articles complex in construction.

## Claims

1. A Pd-Pt-Ni-P based brazing filler metal having a composition comprising:
- in excess of 2 wt. % to less than 20 wt. % phosphorus,
- in excess of 4 wt. % to less than 86 wt. % platinum,
- in excess of 4 wt, % to less than 36 wt. % nickel, and
- a balance of palladium.

2. The brazing filler metal according to Claim 1,
wherein the composition ratio of phosphorus falls within a range of 3 to 17 wt. %, and/or
wherein the composition ratio of the platinum falls within a range of 5 to 85 wt. %, and/or
wherein the composition ratio of the nickel falls within a range of 5 to 32 wt. %.

## Patentansprüche

1. Auf Pd-Pt-Ni-P basierendes Lötfüllmetall mit einer Zusammensetzung, die
- mehr als 2 Gew.-% bis weniger als 20 Gew.-% Phosphor,
- mehr als 4 Gew.-% bis weniger als 86 Gew.-% Platin,
- mehr als 4 Gew.-% bis weniger als 36 Gew.-% Nickel und
- einen Rest Palladium
umfasst.

2. Lötfüllmetall gemäß Anspruch 1,
wobei das Zusammensetzungsverhältnis von Phosphor in einen Bereich von 3 bis 17 Gew.-% fällt, und/oder
wobei das Zusammensetzungsverhältnis von Platin in einen Bereich von 5 bis 85 Gew.-% fällt, und/oder
wobei das Zusammensetzungsverhältnis von Nickel in einen Bereich von 5 bis 32 Gew.-% fällt.

## Revendications

1. Métal d'apport de brasage à base de Pd-Pt-Ni-P ayant une composition comprenant :
- plus de 2 % en poids à moins de 20 % en poids de phosphore,
- plus de 4 % en poids à moins de 86 % en poids de platine,
- plus de 4 % en poids à moins de 36 % en poids de nickel, et
- le complément de palladium.

2. Métal d'apport de brasage selon la revendication 1,
dans lequel le rapport de composition du phosphore se situe dans la gamme de 3 à 17 % en poids, et/ou
dans lequel le rapport de composition du platine se situe dans la gamme de 5 à 85 % en poids, et/ou
dans lequel le rapport de composition du nickel se situe dans la gamme de 5 à 32 % en poids.
